# EUROPEAN PATENT APPLICATION

(11) **EP 2 290 661 A2**
(43) Date of publication of application: **02.03.2011**
(21) Application number: 10150251.6
(22) Date of filing: 07.01.2010
(51) Int. Cl.: H01F 7/06, G02B 7/00, H02K 33/18

(54) **Actuator**

(30) Priority: 25.08.2009 US 236705 P
(71) Applicant: Largan Precision Co. Ltd., Nantun District Taichung City 408 (TW)
(72) Inventor: Huang, Chen Yi, 408, Taichung City (TW); Tseng, Te Sheng, 408, Taichung City (TW); Chen, Chao Yang, 408, Taichung City (TW); Hsu, Wen Hung, 408, Taichung City (TW)
(74) Representative: Charrier, Rapp & Liebau

(57) **Abstract**

This invention provides an actuator at least including a holder having a movable member accommodation space and at least three magnet accommodation spaces, a movable member received by the movable member accommodation space of the holder, and a magnetic circuit system comprising at least three magnets and at least three coils, the magnetic circuit system enabling the movable member to move with respect to an axis and incline at an angle with respect to at least one axis; wherein each of the at least three magnets is received by one of the at least three magnet accommodation spaces and the directions of the top and bottom magnetic poles thereof are perpendicular to the axis with respect to which the movable member moves; and wherein each of the at least three coils corresponds to one of the at least three magnets and is associated with the movable member, and the central axis of each of the at least three coils is perpendicular to the axis with respect to which the movable member moves.

## Description

### BACKGROUND OF THE INVENTION

### FIELD OF THE INVENTION

The present invention relates to an actuator, and more particularly, to an actuator used in a photograph module.

### DESCRIPTION OF THE PRIOR ART

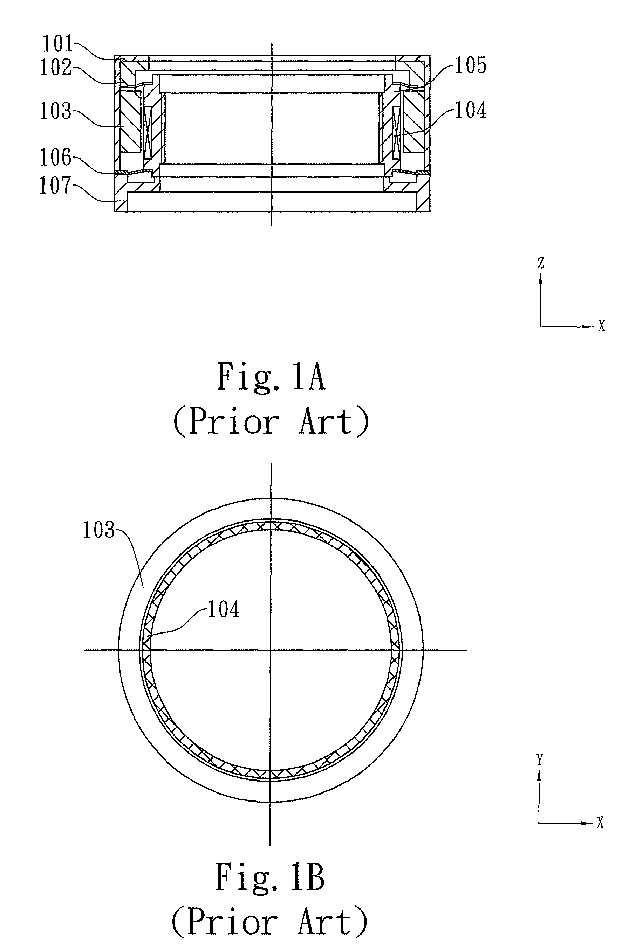

Fig. 1A shows a cross-sectional view of a prior art actuator. The actuator includes a yoke 101, a pad 102, a holder 107, a movable member 105, an elastic member 106 and a magnetic circuit system. As shown in Fig. 1B, the magnetic circuit system comprises a magnet 103 and a coil 104. The coil 104 is electrically driven so that it will interact with the magnetic field of the magnet 103 to generate a force that drives the movable member 105 to move with respect to an axis (Z-axis) when a current is directed therethrough.

Though the prior art actuator can cause a movement with respect to an axis, it is not capable of providing an angle of inclination with respect to any axis. Accordingly, the compensation for an angle of inclination cannot be performed. There remains a need in the art for an improved actuator to resolve the aforementioned drawback.

### SUMMARY OF THE INVENTION

One object of the present invention is to provide an improved actuator capable of causing a movement with respect to an axis and, at the same time, providing an angle of inclination with respect to at least one axis to enable the compensation for an angle of inclination.

The present invention provides an actuator including a holder having a movable member accommodation space and at least three magnet accommodation spaces, a movable member received by the movable member accommodation space of the holder, and a magnetic circuit system comprising at least three magnets and at least three coils, the magnetic circuit system enabling the movable member to move with respect to an axis and incline at an angle with respect to at least one axis; wherein each of the at least three magnets is received by one of the at least three magnet accommodation spaces and the directions of the top and bottom magnetic poles thereof are perpendicular to the axis with respect to which the movable member moves; and wherein each of the at least three coils corresponds to one of the at least three magnets and is associated with the movable member, and the central axis of each of the at least three coils is perpendicular to the axis with respect to which the movable member moves.

In the aforementioned actuator, a power source is used to drive the three coils, enabling the three coils and the corresponding magnets to create a force to drive the movable member. When the currents delivered from the power source are simultaneously directed to the three coils with the same current values, respectively, the movable member can move with respect to an axis; when the currents delivered from the power source having different current values are directed to the three coils, respectively, the movable member can move with respect to an axis and incline at an angle with respect to more than one axis; when only one of the three coils is driven by the current delivered from the power source, the movable member can incline at an angle with respect to an axis; when two of the three coils are driven by the current delivered from the power source, the movable member can incline at an angle with respect to more than one axis.

The present invention provides another actuator including: a holder having a movable member accommodation space and at least three coil accommodation spaces; a movable member received by the movable member accommodation space of the holder; and a magnetic circuit system comprising at least three magnets and at least three coils, the magnetic circuit system enabling the movable member to move with respect to an axis and incline at an angle with respect to at least one axis; wherein each of the at least three coils is received by one of the at least three coil accommodation spaces and the central axis thereof is perpendicular to the axis with respect to which the movable member moves; and wherein each of the at least three magnets corresponds to one of the at least three coils and is associated with the movable member, and the directions of the top and bottom magnetic poles thereof are perpendicular to the axis with respect to which the movable member moves.

### BRIEF DESCRIPTION OF THE DRAWINGS

Fig. 1A shows a schematic cross-sectional view of a prior art actuator.
Fig. 1B shows a schematic top view of the magnetic circuit system of the prior art actuator shown in Fig. 1A.
Fig. 2 shows a schematic perspective view of an actuator in accordance with a first embodiment of the present invention.
Fig. 3 shows a schematic perspective view of the magnetic circuit system of the actuator in accordance with the first embodiment of the present invention.
Fig. 4 shows a schematic top view of the elastic member of the actuator shown in Fig. 2 in accordance with the first embodiment of the present invention.
Fig. 5 shows a schematic perspective view of an actuator in accordance with a second embodiment of the present invention.
Fig. 6 shows a schematic perspective view of the magnetic circuit system of the actuator in accordance with the second embodiment of the present invention.

### DETAILED DESCRIPTION OF THE PREFERRED EMBODIMENTS

The preferred embodiments of an actuator of the present invention will be described in detail with references to the accompanying drawings.

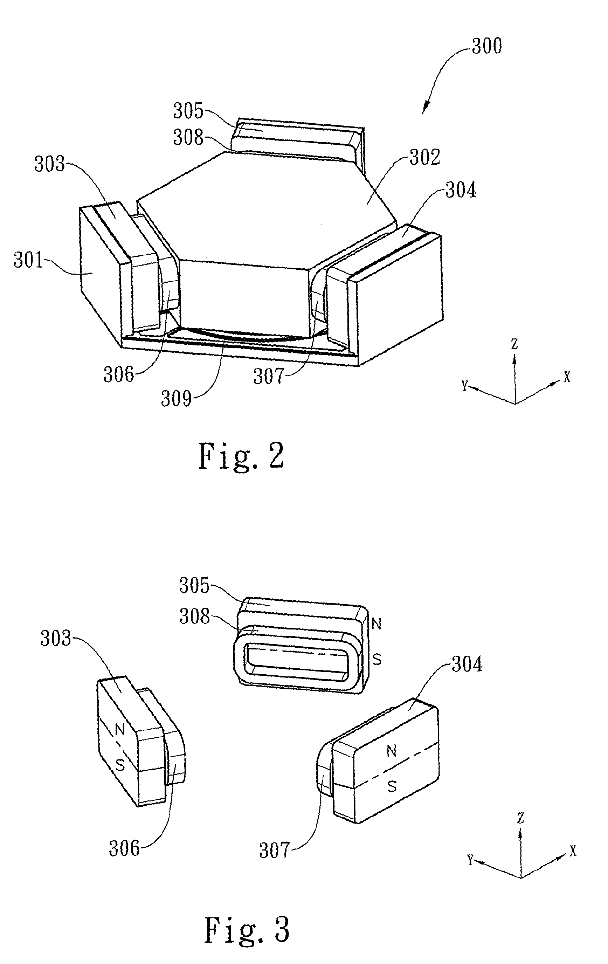

Fig. 2 shows a schematic perspective view of an actuator 300 in accordance with a first embodiment of the present invention. The actuator 300 includes a holder 301 having a moveable member accommodation space and three magnet accommodation spaces, a movable member 302 received by the moveable member accommodation space of the holder 301, an elastic member 309, and a magnetic circuit system comprising three magnets 303, 304 and 305 and three coils 306, 307 and 308 (as shown in Fig. 3), each of the three magnets 303, 304 and 305 being received by a corresponding one of the three magnet accommodation spaces of the holder 301; wherein the three magnet accommodation spaces of the holder 301 are evenly and symmetrically disposed around the movable member 302. In the present invention, the movable member 302 may be cylindrical in shape with the magnets 303, 304 and 305 and the coils 306, 307 and 308 evenly disposed around the circumference thereof.

Fig. 3 shows a schematic perspective view of the magnetic circuit system of the actuator 300 shown in Fig. 2 in accordance with the first embodiment of the present invention. The magnetic circuit system comprises three magnets 303, 304 and 305 and three coils 306, 307 and 308 so as to form three magnet-coil sets whereby the magnetic circuit system is evenly and symmetrically disposed around the movable member 302. The magnetic circuit system enables the movable member 302 to move with respect to an axis and incline at an angle with respect to at least one axis. The first magnet-coil set comprises the magnet 303 and the coil 306; the second magnet-coil set comprises the magnet 304 and the coil 307; the third magnet-coil set comprises the magnet 305 and the coil 308. Each of the magnets 303, 304 and 305 is received by a corresponding one of the three magnet accommodation spaces of the holder 301. In each magnet-coil set, the directions of the top and bottom magnetic poles of the magnet are opposite and perpendicular to the axis with respect to which the movable member 302 moves, and the central axis of the coil is perpendicular to the axis with respect to which the movable member moves. Take the second magnet-coil set as an example, the directions of the top and bottom magnetic poles of the magnet 304 are in the Y and -Y directions, respectively, and the central axis of the coil 307 is Y-axis. When being directed to the coil 307, an electric current may, for example but not limited to, flow through the upper portion of the coil 307 in the X direction while passing through the lower portion of the coil 307 in the -X direction, such that either the upper or the lower portion of the coil 307 is acted upon by a force (Lorentz Force) in the Z direction, that is, the coil 307 moves in the Z direction. As the coil 307 is associated with the movable member 302, the force further drives the movable member 302.

In the aforementioned magnetic circuit system, a power source is used to drive the three coils, enabling the three coils and the corresponding magnets to generate a force to drive the movable member 302. When the currents delivered from the power source are simultaneously directed to the three coils with the same current values, respectively, the movable member 302 can move with respect to an axis. For example, when the currents delivered from the power source are simultaneously directed to the three coils 305, 306 and 307 with the same current values, respectively, each of the three coils 305, 306 and 307 is acted upon by a force of the same magnitude in the Z direction, thereby enabling the movable member 302 to move with respect to the Z-axis. When only one of the three coils is driven by the current delivered from the power source, the movable member 302 can incline at an angle with respect to an axis. For example, when the coil 306 is the only one of the three coils driven by the current delivered from the power source, it is acted upon by a force in the Z direction, thereby enabling the movable member 302 to incline at an angle with respect to the X-axis. When two of the three coils are driven by the current delivered from the power source, the movable member 302 can incline at an angle with respect to more than one axis. For example, when the coils 306 and 307 are driven by the current delivered from the power source, each of the coils 306 and 307 is acted upon by a force in the Z direction, thereby enabling the movable member 302 to incline at an angle with respect to the X-axis and the Y-axis at the same time. When the currents delivered from the power source having different current values are directed to the three coils, respectively, the movable member 302 can move with respect to an axis and incline at an angle with respect to more than one axis. For example, when the coils 305, 306 and 307 are driven by the power source and the current values of the electric currents flowing through the coils 306 and 307 are greater than that of the electric current passing through the coil 305, each of the coils 305, 306 and 307 is acted upon by a force in the Z direction and the forces applied to the coils 306 and 307 is greater than the force applied to the coil 305, thereby enabling the movable member 302 to move with respect to the Z-axis and incline at an angle with respect to the X and Y axes at the same time. The movable member 302 can move with respect to an axis and incline at an angle with respect to at least one axis depending on the current values and directions of the electric currents and the selection of the coils to which the electric currents are to be directed.

The aforementioned magnetic circuit system is a moving-coil system. Alternatively, the aforementioned magnetic circuit system may be embodied as a moving-magnet system by exchanging the positions of the magnet and the coil in each of the three magnet-coil sets shown in Figs. 2 and 3. For example, the positions of the magnet 303 and the coil 306 in the first magnet-coil set are exchanged, with the magnet 303 associated with the movable member 302 and the coil 306 received by a coil accommodation space (i.e. the aforementioned magnet accommodation space is replaced with the coil accommodation space) of the holder 301. In the present invention, the holder 301, which is associated with the moving-coil system or the moving-magnet system, may be made of magnetic conductive material to increase the magnetic efficiency.

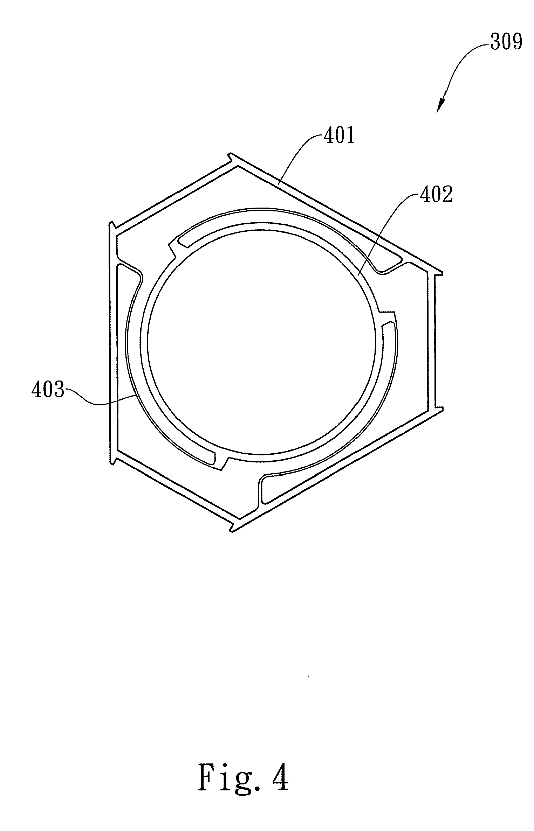

Fig. 4 shows a schematic top view of the elastic member 309 of the actuator 300 in accordance with the first embodiment of the present invention. The elastic member 309 has a fixed portion 401 coupled to the holder 301, a movable portion 402 coupled to the movable member 302, and a bridge portion 403 formed between and in connection with the fixed portion 401 and the movable portion 402. The magnetic circuit system enables the movable member 302 to move axially or incline at an angle with respect to at least one axis, thereby the movable portion 402 of the elastic member 309 can be driven to cause a linear movement of the bridge portion 403 of the elastic member 309. The elastic member 309 may be a plate spring or a coil spring with non-pre-compressed, unidirectional pre-compressed or bidirectional pre-compressed function and provides a linear force which is proportional to the amount of deformation of the bridge portion 403 with the motion of the movable member 302, in other words, the linear force follows the Hooke's law.

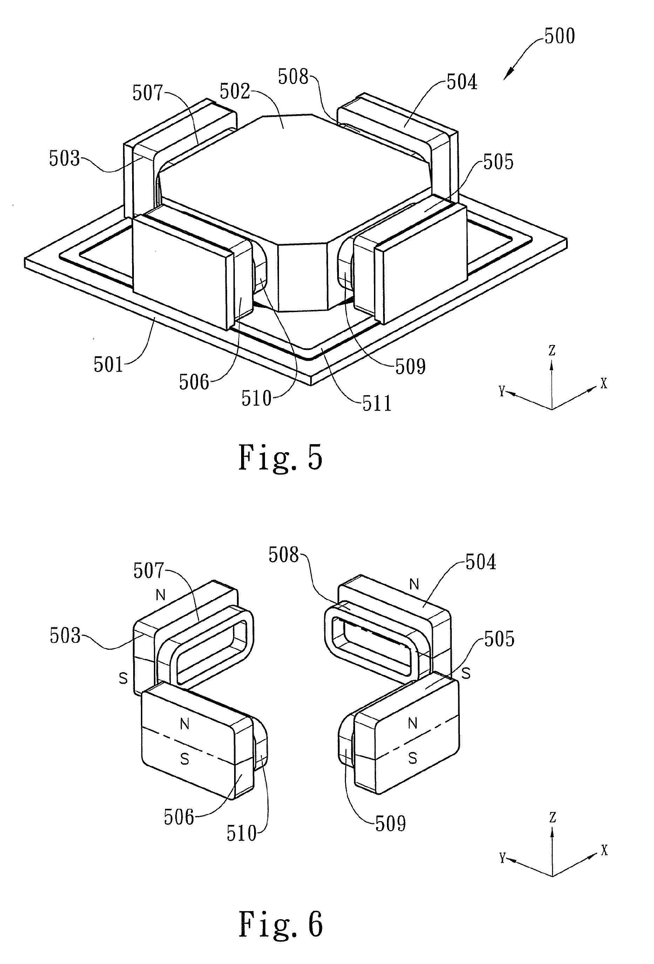

Fig. 5 shows a schematic perspective view of an actuator 500 in accordance with a second embodiment of the present invention. The first and second embodiments of the present invention are similar in terms of the components contained and the arrangement thereof. The two embodiments only differ in the design of the magnetic circuit systems. The magnetic circuit system of the second embodiment comprises four magnet-coil sets while the magnetic circuit system of the first embodiment comprises three magnet-coil sets. In the second embodiment of the present invention, the actuator 500 includes a holder 501 having a moveable member accommodation space and four magnet accommodation spaces, a movable member 502 received by the moveable member accommodation space of the holder 501, an elastic member 511, and a magnetic circuit system comprising four magnets 503, 504, 505 and 506 and four coils 507, 508, 509 and 510 (as shown in Fig. 6), each of the four magnets 503, 504, 505 and 506 being received by a corresponding one of the four magnet accommodation spaces of the holder 501; wherein the four magnet accommodation spaces are evenly and symmetrically disposed around the movable member 502. In the present invention, the movable member 502 may be cylindrical in shape with the magnets 503, 504, 505 and 506 and coils 507, 508, 509 and 510 evenly disposed around the circumference thereof.

Fig. 6 shows a schematic perspective view of the magnetic circuit system of the actuator 500 shown in Fig. 5 in accordance with the second embodiment of the present invention. The magnetic circuit system comprises four magnets 503, 504, 505 and 506 and four coils 507, 508, 509 and 510 so as to form four magnet-coil sets whereby the magnetic circuit system is evenly and symmetrically disposed around the movable member 502. The magnetic circuit system enables the movable member 502 to move with respect to an axis and incline at an angle with respect to at least one axis. The first magnet-coil set comprises the magnet 503 and the coil 507; the second magnet-coil set comprises the magnet 504 and the coil 508; the third magnet-coil set comprises the magnet 505 and the coil 509; the fourth magnet-coil set comprises the magnet 506 and the coil 510. Each of the magnets 503, 504, 505 and 506 is received by a corresponding one of the four magnet accommodation spaces of the holder 501. The operation of this magnetic circuit system is the same as that of the magnetic circuit system of the first embodiment. The aforementioned magnetic circuit system is a moving-coil system. Alternatively, the aforementioned magnetic circuit system may be embodied as a moving-magnet system by exchanging the positions of the magnet and the coil in each of the four magnet-coil sets shown in Figs. 5 and 6. For example, the positions of the magnet 503 and the coil 507 in the first magnet-coil set are exchanged, with the magnet 503 associated with the movable member 502 and the coil 507 received by a corresponding coil accommodation space (i.e. the aforementioned magnet accommodation space is replaced with the coil accommodation space) of the holder 501. In the present invention, the holder 501, which is associated with the moving-coil system or the moving-magnet system, may be made of magnetic conductive material to increase the magnetic efficiency.

The actuator of the present invention features the following advantages:
1. The coils of the actuator can be driven independently.
2. The actuator can provide a movement with respect to an axis and an angle of inclination with respect to an axis at the same time.
3. The actuator can provide a movement with respect to an axis and an angle of inclination with respect to more than one axis at the same time.
4. The actuator can facilitate the compensation of an angle of inclination caused during the module assembly.
5. The actuator can provide a movement with respect to an axis and an angle of inclination with respect to one or more than one axis for the entire system.

The preferred embodiments described above are exemplary and are not intended to limit the claim scope of the present invention. Various modifications and variations made within the spirit of the invention shall be considered as falling within the scope of the appended claims.

## Claims

1. An actuator, including:
a holder having a movable member accommodation space and at least three magnet accommodation spaces;
a movable member received by the movable member accommodation space of the holder; and
a magnetic circuit system comprising at least three magnets and at least three coils, the magnetic circuit system enabling the movable member to move with respect to an axis and incline at an angle with respect to at least one axis; wherein each of the at least three magnets is received by one of the at least three magnet accommodation spaces and the directions of the top and bottom magnetic poles thereof are perpendicular to the axis with respect to which the movable member moves; and wherein each of the at least three coils corresponds to one of the at least three magnets and is associated with the movable member, and the central axis of each of the at least three coils is perpendicular to the axis with respect to which the movable member moves.

2. The actuator according to claim 1 further includes an elastic member having a fixed portion coupled to the holder, a movable portion coupled to the movable member, and a bridge portion connected with the fixed portion and the movable portion, wherein the elastic member performs at least a linear movement with respect to an axis with the movement of the movable member.

3. The actuator according to claim 1, wherein the magnetic circuit system is evenly disposed around a circumference of the movable member.

4. The actuator according to claim 1, wherein the magnetic circuit system is symmetrically disposed around the movable member.

5. The actuator according to claim 1, wherein the holder is made of magnetic conductive material.

6. The actuator according to claim 1, wherein the directions of the top and bottom magnetic poles of each of the at least three magnets are opposite.

7. The actuator according to claim 1, wherein the magnetic circuit system comprises four magnets and four coils.

8. The actuator according to claim 2, wherein the elastic member is a plate spring or a coil spring.

9. An actuator, including:
a holder having a movable member accommodation space and at least three coil accommodation spaces;
a movable member received by the movable member accommodation space of the holder; and
a magnetic circuit system comprising at least three magnets and at least three coils, the magnetic circuit system enabling the movable member to move with respect to an axis and incline at an angle with respect to at least one axis; wherein each of the at least three coils is received by one of the at least three coil accommodation spaces and the central axis thereof is perpendicular to the axis with respect to which the movable member moves; and wherein each of the at least three magnets corresponds to one of the at least three coils and is associated with the movable member, and the directions of the top and bottom magnetic poles thereof are perpendicular to the axis with respect to which the movable member moves.

10. The actuator according to claim 9 further including an elastic member having a fixed portion coupled to the holder, a movable portion coupled to the movable member, and a bridge portion connected with the fixed portion and the movable portion, wherein the elastic member performs at least a linear movement with respect to an axis with the movement of the movable member.

11. The actuator according to claim 9, wherein the magnetic circuit system is evenly disposed around a circumference of the movable member.

12. The actuator according to claim 9, wherein the magnetic circuit system is symmetrically disposed around the movable member.

13. The actuator according to claim 9, wherein the holder is made of magnetic conductive material.

14. The actuator according to claim 9, wherein the directions of the top and bottom magnetic poles of each of the at least three magnets are opposite.

15. The actuator according to claim 9, wherein the magnetic circuit system comprises four magnets and four coils.

16. The actuator according to claim 10, wherein the elastic member is a plate spring or a coil spring.
